**Europäisches Patentamt**

**European Patent Office**

**Office européen des brevets**

(19)

(11) Veröffentlichungsnummer : **0 548 668 B1**

(12)

# EUROPÄISCHE PATENTSCHRIFT

(45) Veröffentlichungstag der Patentschrift :
**30.08.95 Patentblatt 95/35**

(51) Int. Cl.$^6$ : **G03B 27/73**

(21) Anmeldenummer : **92120942.5**

(22) Anmeldetag : **09.12.92**

(54) **Verfahren zum Verändern des spektralen Transmissionsverlaufs eines Farbfilters und photographisches Farbkopiergerät.**

(30) Priorität : **20.12.91 DE 4142435**

(43) Veröffentlichungstag der Anmeldung :
**30.06.93 Patentblatt 93/26**

(45) Bekanntmachung des Hinweises auf die
Patenterteilung :
**30.08.95 Patentblatt 95/35**

(84) Benannte Vertragsstaaten :
**CH DE FR GB LI**

(56) Entgegenhaltungen :
**EP-A- 0 420 817**
**PATENT ABSTRACTS OF JAPAN vol. 16, no. 9**
**(P-1296) 10. Januar 1992 ; & JP-A-03 230 145**
**PATENT ABSTRACTS OF JAPAN vol. 4, no. 35**
**(P-003) 25. März 1980 ; & JP-A-55 006 365**

(73) Patentinhaber : **Agfa-Gevaert AG**
**Kaiser-Wilhelm-Allee**
**D-51373 Leverkusen (DE)**

(72) Erfinder : **Münch, Reimund, Dr.**
**Berg-Isel-Strasse 19**
**W-8000 München 90 (DE)**

EP 0 548 668 B1

## Beschreibung

Die Erfindung betrifft ein Verfahren und eine Vorrichtung zum Verändern des spektralen Transmissionsverlaufs einer optischen Meß anordnung nach dem Oberbegriff des Anspruchs 1. Insbesondere betrifft die Erfindung ein fotografisches Farbkopiergerät nach dem Oberbegriff des Anspruchs 8 zum Reproduzieren einer Kopiervorlage auf einem Kopiermaterial, in dem sich eine Meßanordnung mit Farbfiltern befindet, die sehr exakte Transmissionsverläufe aufweisen müssen.

Bei bekannten Geräten dieser Art wird die Kopierlichtmenge optimiert, indem sie in Abhängigkeit von der Dichte der Kopiervorlage gesteuert wird. Um die Dichte der Kopiervorlage zu bestimmen, sind Meßanordnungen bekannt, die die Kopiervorlage punkt- oder bereichsweise in den drei Grundfarben ausmessen. Mit den daraus gewonnenen Meßwerten werden dann optimale Kopierlichtmengen berechnet und die Lichtmengen im Farbkopiergerät entsprechend gesteuert. Die Meßanordnungen enthalten Meßfilter, z. B. optische Interferenz- oder Massefilter, die nur für Licht eines bestimmten Wellenlängenbereichs transparent sind. Diese in den Meßanordnungen verwendeten Farbfilter haben entscheidenden Einfluß auf die Farbwiedergabe bei der Reproduktion der Kopiervorlage. Der spektrale Transmissionsverlauf der Filter ist dabei von erheblicher Bedeutung. Um Farbstiche in den Reproduktionen zu vermeiden, ist der spektrale Transmissionsverlauf der Filter genau an die spektrale Empfindlichkeit des verwendeten Kopiermaterials angepaßt.

Aus der DE-A-33 17 804 ist ein Verfahren und eine Vorrichtung zum Bestimmen der Kopierlichtmengen in Farbkopierern bekannt, in denen Meßfilter der oben genannten Art einen definierten Transmissionsverlauf aufweisen. Bei der Fertigung der Meßfilter zeigt sich jedoch, daß die geforderten spektralen Transmissionsverläufe der Meßfilter oft nicht eingehalten werden können. Das führt dazu, daß mit einer hohen Ausschußrate produziert wird. Es hat sich ferner gezeigt, daß die Lage der ansteigenden bzw. abfallenden Kanten der Transmissionsverläufe besonders großen Einfluß auf die Verwendbarkeit der Filter hat.

In der JP-A-03230145 ist beschrieben, zum Ändern des spektralen Transmissionsverlaufs eines Interferenzfilters das Interferenzfilter von einem Schrittmotor derart anzutreiben, daß sich der Winkel zwischen Filter und einfallendem Licht ändert. Das Interferenzfilter befindet sich bei dieser Veröffentlichung in einer Meßeinrichtung eines Kopiergeräts, deren spektraler Transmissionsverlauf dadurch geändert wird. Auch bei dem Verfahren dieser Veröffentlichung kann der Transmissionsverlauf des filters bzw. der Meßeinrichtung nur insgesamt zu höheren oder niedrigeren Wellenlängen hin verschoben werden.

Aus der EP-A-0 420 816 ist eine Meßanordnung in einem fotografischen Farbkopiergerät bekannt, bei welcher die Verschiebung der Transmissionslinien von Farbfiltern bei unterschiedlichem Einfallswinkel des Lichts auf die Filter ausgenutzt wird, Farbauszugswerte in unterschiedlichen spektralen Bereichen zu gewinnen. Dazu werden ein feststehender Meßfilter und mindestens zwei Einzeldetektoren verwendet, wobei die Detektoren so angeordnet sind, daß sie jeweils einen anderen Winkelbereich des vom Filter kommenden Meßlichtkegels erfassen. Um mit dieser Vorrichtung einen möglichst großen Winkelbereich und damit einen möglichst großen spektralen Bereich zu erfassen, ist eine Vielzahl von Einzeldetektoren notwendig. Neben den erhöhten Kosten für die Vielzahl von Einzeldetektoren erfassen die Einzeldetektoren jeweils nur spektrale Bereiche, deren Maxima um einen bestimmten Abstand getrennt sind. Aufgrund der Geometrie der bekannten Lösung läßt sich dieser Abstand nicht beliebig verkleinern. Zur Anpassung der Meßanordnung an die spektrale Empfindlichkeit einer Kopiervorlage werden die Meßsignale derjenigen Einzeldetektoren verwendet, deren erfaßter spektraler Bereich mit der spektralen Empfindlichkeit des verwendeten Kopiermaterials möglichst genau übereinstimmt. Bei der Verwendung einer Vielzahl von verschiedenen Kopiermaterialien kann es vorkommen, daß das Maximum der spektralen Empfindlichkeit des verwendeten Kopiermaterials genau zwischen den Maxima der von den Einzeldetektoren erfaßten spektralen Bereiche liegt. Als Folge davon können Farbverfälschungen auftreten.

In der JP-A-55006365 ist ein Multilayer-Dünnfilmfilter beschrieben, der im Kopierteil einer Kopiermaschine derart gedreht wird, daß sich der Winkel zwischen dem Filter und einfallendem Licht ändert. Dadurch verschiebt sich der Transmissionsverlauf des Filters insgesamt zu niedrigeren bzw. höheren Wellenlängen hin, z. B. von dem in der dortigen Figur gezeigten Verlauf 12 zum Verlauf 19 oder umgekehrt. Weise diese Figur ebenfalls zeigt, wirk die Verschiebung auf den gesamten Transmissionsverlauf, d. h. auch auf abfallende und ansteigende Kanten des Transmissionsverlaufs in gleicher Weise.

Es ist Aufgabe der vorliegenden Erfindung, ein Verfahren und eine Vorrichtung zur Durchführung des Verfahrens anzugeben, mit denen der spektrale Transmissionsverlauf einer optischen Meßanordnung, die mehrere Farbfilter enthält kontinuierlich und ohne großen Aufwand verändert werden kann.

Diese Aufgabe wird gelöst durch das im Anspruch 1 angegebene Verfahren, sowie durch das im Anspruch 8 angegebene fotografische Farbkopiergerät.

Die Erfindung ist nicht nur in fotografischen Farbkopiergeräten anwendbar, sondern kann in beliebigen optischen Anordnungen verwendet werden, bei denen Farbfilter benötigt werden, deren Transmissionskanten mit einer Genauigkeit von einigen Nanometern stimmen müssen.

Die Erfindung macht sich die Erkenntnis zunutze, daß die Transmissionslinien eines optischen Farbfilters durch Änderung der Lage des Farbfilters bezüglich des einfallenden Lichtes verschoben werden können. Diese Verschiebung erfolgt vorteilhaft gegenüber dem Stand der Technik nicht in diskreten Schritten, sondern kontinuierlich. Auf diese Weise läßt sich das Maximum des von einem einzigen Detektor erfaßten Spektralbereiches besser auf die spektrale Empfindlichkeit eines Kopiermaterials einstellen.

Weiterbildungen und vorteilhafte Ausbildungsformen sind Gegenstand der abhängigen Patentansprüche.

Im folgenden wird ein mögliches Ausführungsbeispiel der Erfindung anhand der Zeichnungen näher erläutert. Es zeigen:

Fig. 1    den prinzipiellen Aufbau der Meßanordnung,

Fig. 2    den Kurvenverlauf von Transmissionskanten in Abhängigkeit vom Einfallswinkel des Lichtstrahls auf den Meßfilter,

Fig. 3    die Überlagerung der Transmissionskurve eines Testnegativs mit den Transmissionskanten gemäß Fig. 2,

Fig. 4    den Verlauf der von der Meßzelle 4 erfaßten Lichtintensität in Abhängigkeit vom Einfallswinkel gemäß Fig. 3.

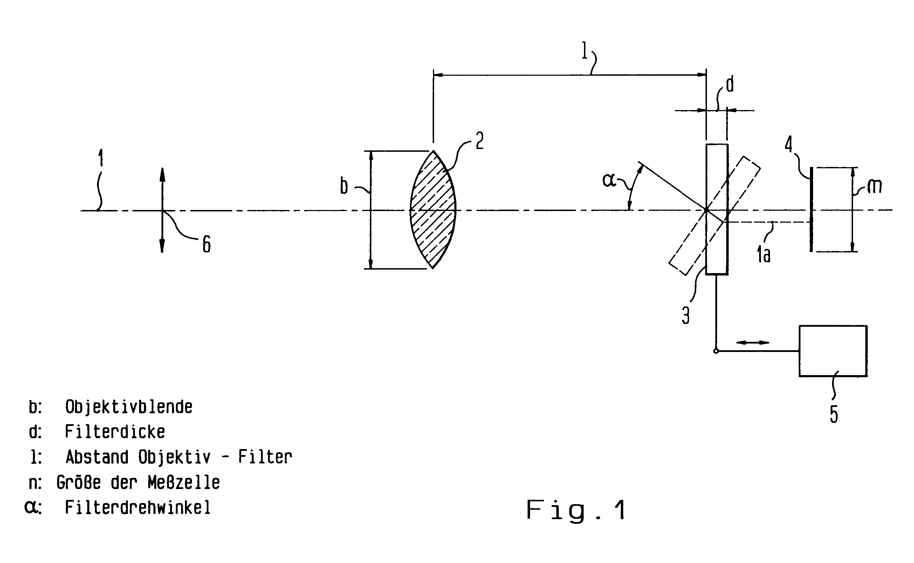

Fig. 1 zeigt den prinzipiellen Aufbau der Meßanordnung. Mit 1 ist ein von einer nicht gezeichneten Lichtquelle abgegebener Lichtstrahl beziffert. Der Lichtstrahl 1 durchläuft ein Objektiv 2, den Meßfilter 3 und trifft auf die Meßzelle 4. Das Objektiv 2 besitzt eine maximale Objektivöffnung b. Der Abstand zwischen Objektiv 2 und Meßfilter ist mit 1 bezeichnet. Die Meßzelle 4 weist eine aktive Fläche mit dem Durchmesser m auf. Mittels einer Drehvorrichtung 5 kann der Meßfilter 3 um einen beliebigen Winkel $\alpha$ verdreht werden. Durch die Drehung ändert sich der Einfallswinkel des Lichtstrahls 2 auf den Meßfilter. Zwischen Lichtquelle und Objektiv 2 kann z. B. ein Testnegativ 6 eingeschoben werden.

Der Meßfilter 3 ist auch in einer gedrehten Stellung gestrichelt dargestellt. Das Drehen des Meßfilters 3 bewirkt eine Parallelverschiebung der optischen Achse.

Der Lichtstrahl 1 erfährt nach dem Durchlaufen des Meßfilters 3 eine Parallelverschiebung. Der parallel verschobene Lichtstrahl ist mit 1a beziffert. Bei der Dimensionierung der Meßanordnung ist darauf zu achten, daß der Lichtstrahl auch nach der Parallelverschiebung noch auf die aktive Fläche der Meßzelle 4 trifft. Der Effekt der Parallelverschiebung des Lichtstrahles kann vernachlässigt werden, wenn die Dicke d des Meßfilters 3 wesentlich geringer ist als der Durchmesser m der aktiven Fläche der Meßzelle 4. Versuche haben gezeigt, daß es im allgemeinen genügt, die Bedingung $d < \dfrac{m}{2}$ zu erfüllen.

Das Kippen des Meßfilters 3 zeigt einen weiteren unerwünschten Effekt: Durch die Verlängerung des Weges durch das optische Medium des Meßfilters 3 erfolgt eine Verschiebung des Brennpunktes vor die Meßzelle 4. Dieser Effekt kann vernachlässigt werden, wenn wenigstens eine der folgenden Bedingungen erfüllt ist: Entweder muß der Abstand zwischen Objektiv und Filter sehr viel größer sein als die Filterdicke d oder der Durchmesser m der aktiven Fläche der Meßzelle 4 muß größer oder gleich einem Zehntel der maximalen Objektivöffnung b sein.

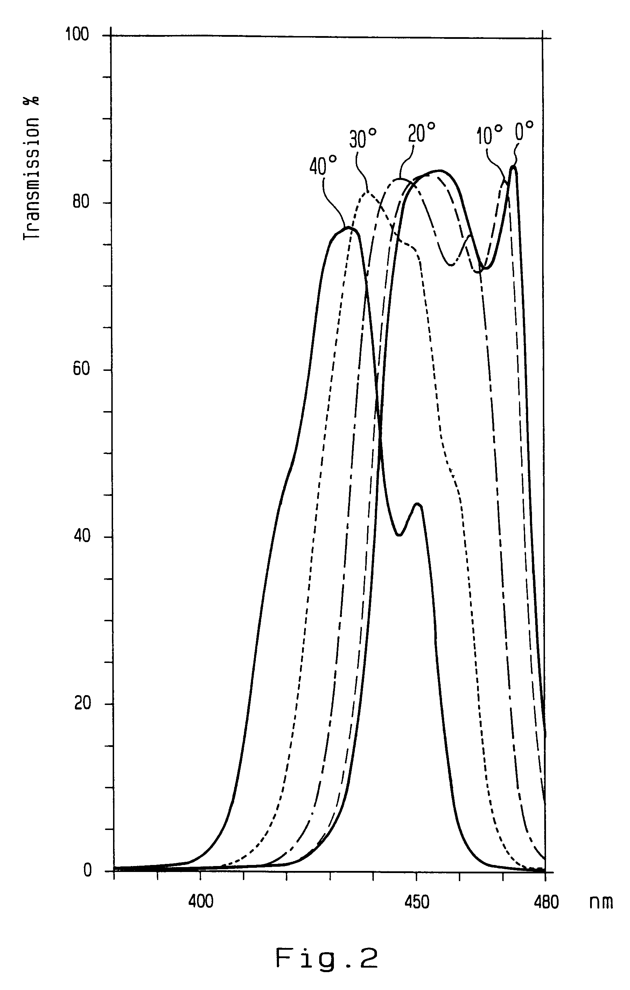

Fig. 2 zeigt den Verlauf der Transmission eines erfindungsgemäßen Filters in Abhängigkeit vom Winkel $\alpha$. Die durchgezogene Linie zeigt den Verlauf bei nicht geschwenktem Meßfilter 3, die gestrichelte Linie den Verlauf der Transmissionslinien bei einem um 10° geschwenkten Meßfilter 3, die strichpunktierte Linie den Transmissionsverlauf bei einem um 20° gedrehten Winkel und die punktierte Linie den Transmissionslinienverlauf bei einem um 30° gedrehten Meßfilter 3. Die sich bei einem um 40° gedrehten Meßfilter 3 ergebende Transmissionslinie ist wieder als durchgezogene Linie gezeichnet. Man beachte, daß auch die Transmissionslinie bei einem nicht verschwenkten Filter 3 genauso wie die 40°-Linie durchgezogen gezeichnet ist, die Unterschiede der Kurvenverläufe sind jedoch so augenscheinlich, daß die Gefahr einer Verwechslung nicht gegeben ist.

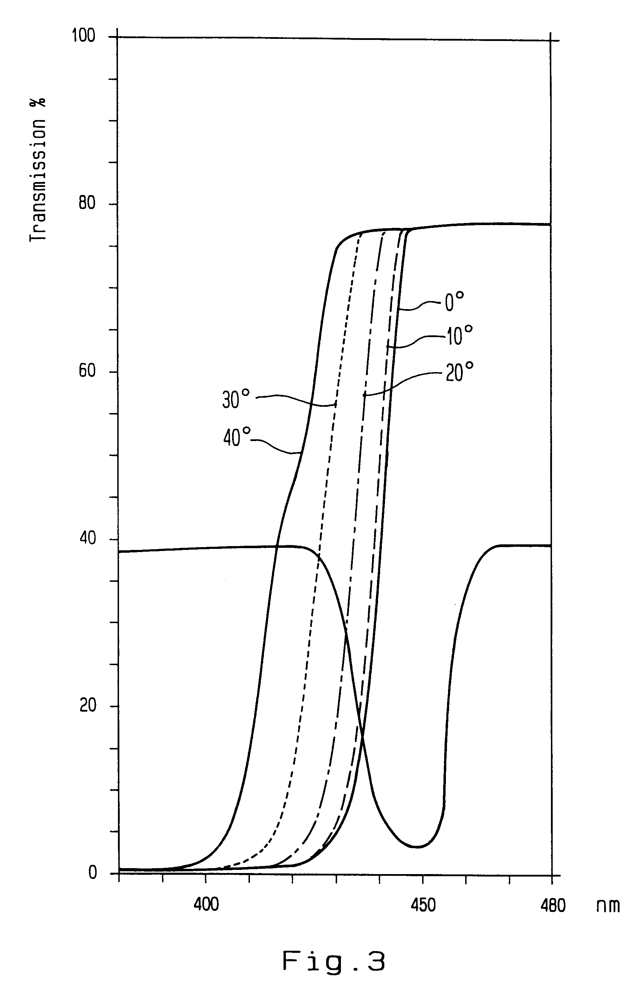

In Fig. 3 ist neben den schematisiert dargestellten Transmissions-Anstiegskanten eines Meßfilters 3 ähnlich dem in der Fig. 2 dargestellten Kurvenverlauf zusätzlich die Transmissionslinie eines im Grünbereich belichteten Negativs 6 dargestellt.

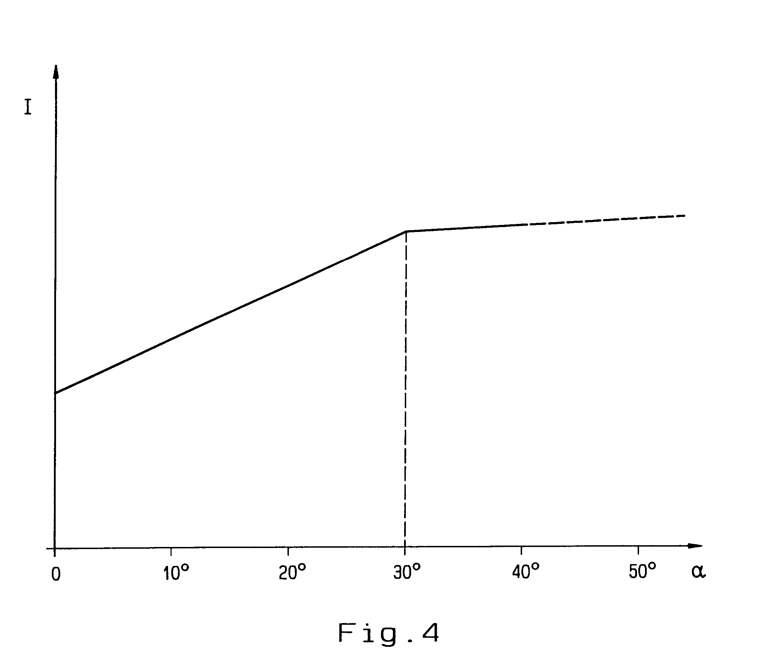

Bis 425 nm verläuft die Transmissionslinie des Negativs 6 geradlinig; da das Negativ 6 in diesem Bereich nicht belichtet wurde, erfolgte auch keine Schwärzung. Die stärkste Schwärzung liegt im Wellenlängenbereich um 450 nm; dort ist das Negativ am stärksten geschwärzt, dementsprechend ist die Transmission, d. h. das durchgelassene Licht in diesem Bereich minimal. Mit zunehmender Wellenlänge steigt die Transmission an und erreicht bei ungefähr 470 nm wieder den linearen Bereich. Aus der Figur ist deutlich zu erkennen, daß die Transmissionslinie eines um 30° gedrehten Meßfilters 3 die Transmissionslinie des im Grünen belichteten Negativs 6 im Bereich von 425 nm schneidet. Dort beginnt der durch die Belichtung bedingte Abfall der Transmissionslinie des Negativs 6. Dieser Schnittpunkt läßt sich - wie bei der Beschreibung der Fig. 4 im folgenden ausgeführt - auf einfache Art und Weise detektieren.

In Fig. 4 ist die Intensität des Lichts, welches durch das Testnegativ 6 und den optischen Filter 3 gelangt, dargestellt. Die Kurve beschreibt das spektrale Integral der Lichtmenge, welche in Abhängigkeit vom Verstellwinkel $\alpha$ durch den Filter 3 und das Testnegativ 6 gelangt. Wie aus Fig. 3 ersichtlich, gelangen bei einem gerade stehenden Meßfilter 3 nur die spektralen Anteile des Lichtes, welche oberhalb ca. 435 nm liegen, auf die Meßzelle und bilden den Anfangswert der Integralkurve. Durch Vergrößern des Winkels $\alpha$ verschiebt sich die Transmissionslinie des Meßfilters 3; das durchgelassene Licht umfaßt einen größeren Spektralbereich, dementsprechend steigt die Kurve in Fig. 4. Die Zunahme der Intensität ist hier stark, weil durch Drehung des Meßfilters 3 die Transmissionskante genau in dem spektralen Bereich, in welchem die Flanke der Transmissionslinie des Testnegatives liegt, verschoben wird. Dieser Bereich reicht etwa von 450 nm bis 425 nm (s. Fig. 3). Eine Änderung des Winkels $\alpha$ bewirkt, daß ein größerer spektraler Bereich von der Meßzelle 4 detektiert wird.

Der spektrale Bereich oberhalb 425 nm gelangt auf die Meßzelle 4, wenn der Meßfilter 3 um einen Winkel $\alpha = 30°$ gedreht ist. Eine weitere Drehung des Meßfilters 3 (z. B. Winkel $\alpha = 40°$) läßt Licht ab einem Wellenbereich von ca. 415 nm auf der Meßzelle 4 auftreffen. Die Integralkurve der Intensität in Fig. 4 steigt in diesem Bereich nicht mehr so stark wie zwischen 0° und 30° an, da sich in diesem Bereich die Transmission des Negativs 6 nicht mehr ändert. Dementsprechend geringer ist die Steigung der in Fig. 4 dargestellten Integralkurve. Der Knickpunkt in der Steigung der Kurve in Fig. 4, welcher etwa bei einer Drehung des Meßfilters 3 um 30° auftritt, entspricht der Lage der abfallenden Kante der Transmissionslinie des Testnegativs 6.

Dieser Knickpunkt kann auch dazu verwendet werden, um die Winkelstellung $\alpha$ des Meßfilters 3 zu detektieren. Bei Verwendung eines beliebigen Testnegativs mit bekannter abfallender Kante der Transmissionslinie wird der Drehwinkel $\alpha$ des Meßfilters 3 kontinuierlich erhöht und mit der Meßzelle und einer daran angeschlossenen Elektronik wird das Auftreten des Knickpunktes detektiert. Es ist bekannt, bei welcher Wellenlänge die abfallende Kante der Transmissionslinie des Testnegativs liegt. Außerdem ist bekannt, bei welchem Winkel $\alpha_s$ die Transmissionslinie des Meßfilters 3 die Transmissionslinie des Testnegativs im Bereich der abfallenden Kante schneidet. Da der Knickpunkt in der Integralkurve (gemäß Fig. 4) genau bei diesem Winkel $\alpha_s$ auftritt, läßt sich rückschließen, daß der Meßfilter 3 genau um diesen Winkel $\alpha_s$ gedreht ist, wenn der Knickpunkt auftritt. Dies erlaubt ein ganz definiertes Einstellen des Meßfilters 3 und der Transmissionskante.

Wie aus Fig. 2 ersichtlich, verschiebt sich beim Verändern des Winkels $\alpha$ sowohl die Anstiegs- als auch die abfallende Kante der Transmissionslinien des Meßfilters. Zur Anpassung an das verwendete Kopiermaterial ist es jedoch vonnöten, daß sowohl die Anstiegs- als auch die abfallende Kante des Meßfilters an die jeweilige spektrale Empfindlichkeit des Kopiermaterials angepaßt wird.

Dazu kann man eine Kombination aus mehreren einzelnen Filtern verwenden und die entsprechenden Filtermaterialien so auswählen, daß z. B. die abfallende Kante des Filters im wesentlichen unbeeinflußt bleibt, wenn die Anstiegskante verändert wird.

Dazu wird die abfallende Kante des gedrehten Filters weit außerhalb des benötigten Spektralbereiches gelegt und die wirksame Begrenzung des Spektralbereiches mit einem weiteren Filter (anderer Filtertyp; z. B. Masse- oder Folienfilter) festgelegt.

Die Winkelabhängigkeit von Massefiltern ist sehr viel geringer als die von Interferenzfiltern: Ein typischer Drehwinkel von 30° führt bei Interferenzfiltern zu einer Verschiebung der Transmissionskanten um Wellenlängen von 10 bis einigen -zig Nanometern, während er bei Massefiltern nur zu einer Verschiebung von einigen Nanometern führt. Bei Massefiltern besteht dafür die Möglichkeit, daß die Verschiebung in Richtung zu kleineren oder zu größeren Wellenlängen hin erfolgt, je nachdem, ob die ansteigende oder die abfallende Transmissionskante verschoben wird.

Eine etwas aufwendigere Ausführungsform sieht vor, daß zum Abgleich der ansteigenden und abfallenden Flanken die einzelnen Filter der Filterkombination um einen unterschiedlichen Betrag gedreht werden. Dies erlaubt eine unabhängige Anpassung der Anstiegsflanke und der abfallenden Flanke an das verwendete Kopiermaterial.

Mit den oben genannten Maßnahmen ist somit die spektrale Empfindlichkeit der Meßanordnung sehr genau an die spektrale Empfindlichkeit des verwendeten Kopiermaterials angleichbar.

## Patentansprüche

1. Verfahren zum Verändern des spektralen Transmissionsverlaufs einer optischen Meßanordnung, die mehrere Farbfilter (3) enthält, dadurch gekennzeichnet, daß die Farbfilter (3) jeweils unabhängig voneinander derart gedreht werden, daß sich für jeden Farbfilter (3) der Einfallswinkel ($\alpha$) des auf den Farbfilter (3) auftreffenden Lichts unabhängig von den Einfallswinkeln der anderen Farbfilter ändert.

**2.** Verfahren nach Anspruch 1, dadurch gekennzeichnet, daß die Farbfilter (3) jeweils Interferenzfilter oder Massefilter sind.

**3.** Verfahren nach Anspruch 1 oder 2, dadurch gekennzeichnet, daß mit der Meßanordnung in einem fotografischen Farbkopiergerät zunächst die Farbdichtewerte einer Kopiervorlage in den drei Grundfarben punkt- oder bereichsweise gemessen werden, wobei der spektrale Transmissionsverlauf der Meßanordnung an die spektrale Empfindlichkeit eines Kopiermaterials angepaßt ist, und dann die Kopiervorlage im Farbkopiergerät auf das Kopiermaterial kopiert wird und die dabei verwendeten Kopierlichtmengen den gemessenen Farbdichtewerten der Kopiervorlage entsprechend gesteuert werden und daß die Drehung der Farbfilter (3) zur genauen Anpassung des spektralen Transmissionsverlaufs an die spektrale Empfindlichkeit des Kopiermaterials erfolgt.

**4.** Verfahren nach Anspruch 3, dadurch gekennzeichnet, daß die Messung der Farbdichte mit einem Sensor (4) erfolgt, der die Intensität des durch den Farbfilter (3) tretenden Lichtes erfaßt.

**5.** Verfahren nach einem der vorhergehenden Ansprüche, dadurch gekennzeichnet, daß die einzelnen Filter um unterschiedliche Winkel gedreht werden.

**6.** Verfahren nach Anspruch 3, dadurch gekennzeichnet, daß zum Anpassen der spektralen Transmission der Meßanordnung (3) an die spektrale Empfindlichkeit des Kopiermaterials eine Testkopiervorlage (6) ausgemessen wird, deren spektraler Dichteverlauf bekannt ist und daß der Farbfilter (3) so lange gedreht wird, bis die gemessene Intensität ein Maximum erreicht.

**7.** Verfahren nach Anspruch 6, dadurch gekennzeichnet, daß das Intensitätsmaximum elektronisch detektiert wird.

**8.** Fotografisches Farbkopiergerät zum Kopieren einer farbigen Kopiervorlage auf ein Farbkopiermaterial mit einer mehrere Farbfilter enthaltenden Meßanordnung zum punkt- oder bereichsweisen Messen der Farbdichtewerte der Kopiervorlage in den drei Grundfarben, wobei der spektrale Transmissionsverlauf der Meßanordnung an die spektrale Empfindlichkeit des Kopiermaterials angepaßt ist und wobei die beim Kopieren verwendeten Kopierlichtmengen den gemessenen Farbdichtewerten entsprechend gesteuert werden, dadurch gekennzeichnet, daß Mittel vorgesehen sind, mit denen die Farbfilter jeweils unabhängig voneinander derart drehbar sind, daß sich für jedes Farbfilter der Einfallswinkel ($\alpha$) des auf den Farbfilter auftreffenden Lichts unabhängig von den Einfallswinkeln der anderen Farbfilter ändert.

**9.** Vorrichtung nach Anspruch 8, dadurch gekennzeichnet, daß ein Sensor (4) vorgesehen ist, der die Intensität des den Farbfilter (3) passierenden Lichts erfaßt.

**10.** Vorrichtung nach Anspruch 9, dadurch gekennzeichnet, daß der Durchmesser m der aktiven Fläche des Sensors (4) größer als die halbe Dicke d des Farbfilters (3) und größer oder gleich einem Zehntel der maximalen Objektivöffnung b ist.

## Claims

**1.** Method for altering the spectral transmission curve of an optical measuring arrangement containing a plurality of colour filters (3), characterized in that the colour filters (3) are each rotated independently of one another in such a way that the angle of incidence ($\alpha$) of the light incident on the colour filter (3) changes for each colour filter (3) independently of the angles of incidence of the other colour filters.

**2.** Method according to Claim 1, characterized in that the colour filters (3) are in each case interference filters or mass filters.

**3.** Method according to Claim 1 or 2, characterized in that the colour density values of a copying master are first measured in the three primary colours point-by-point or area-by-area using the measuring arrangement in a photographic colour copying appliance, the spectral transmission curve of the measuring arrangement being matched to the spectral sensitivity of a copying material, and the copying master is then copied onto the copying material in the colour copying appliance and the amounts of copying light used in this process are controlled in accordance with the measured colour-density values of the copying master, and in that the colour filters (3) are rotated in order to match the spectral transmission curve precisely to the spectral sensitivity of the copying material.

4. Method according to Claim 3, characterized in that the colour density is measured with a sensor (4) which determines the intensity of the light passing through the colour filter (3).

5. Method according to one of the preceding claims, characterized in that the individual filters are rotated through different angles.

6. Method according to Claim 3, characterized in that, in order to match the spectral transmission of the measuring arrangement (3) to the spectral sensitivity of the copying material, a test copying master (6) is measured whose spectral density curve is known, and in that the colour filter (3) is rotated until the measured intensity reaches a maximum.

7. Method according to Claim 6, characterized in that the intensity maximum is detected electronically.

8. Photographic colour copying appliance for copying a coloured copying master onto a colour copying material using a measuring arrangement containing a plurality of colour filters for the point-by-point or area-by-area measurement of the colour density values of the copying master in the three primary colours, the spectral transmission curve of the measuring arrangement being matched to the spectral sensitivity of the copying material and the amounts of copying light used during the copying being controlled in accordance with the measured colour-density values, characterized in that means are provided with which the colour filters can each be rotated independently of one another in such a way that the angle of incidence ($\alpha$) of the light incident on the colour filter changes for each colour filter independently of the angles of incidence of the other colour filters.

9. Apparatus according to Claim 8, characterized in that a sensor (4) is provided which determines the intensity of the light passing through the colour filter (3).

10. Apparatus according to Claim 9, characterized in that the diameter m of the active area of the sensor (4) is greater than half the thickness d of the colour filter (3) and is greater than or equal to one tenth of the maximum lens aperture b.

## Revendications

1. Procédé pour modifier la courbe de transmission spectrale d'un dispositif de mesure optique qui contient plusieurs filtres chromatiques (3), caractérisé par le fait que l'on fait tourner chacun des filtres chromatiques (3) indépendamment l'un de l'autre de façon que pour chaque filtre chromatique (3) l'angle d'incidence ($\alpha$) de la lumière tombant sur le filtre chromatique (3) se modifie indépendamment des angles d'incidence des autres filtres chromatiques.

2. Procédé selon la revendication 1, caractérisé par le fait que les filtres chromatiques (3) sont respectivement des filtres d'interférence ou des filtres en masse.

3. Procédé selon la revendication 1 ou 2, caractérisé par le fait qu'avec le dispositif de mesure dans une photocopieuse couleur on mesure tout d'abord, par points ou par zones, dans les trois couleurs de base, les valeurs de la densité de couleur d'un original à photocopier, la courbe de transmission spectrale du dispositif de mesure étant adaptée à la sensibilité spectrale d'un matériau pour photocopie, puis que, dans la photocopieuse, on photocopie l'original à photocopier sur le matériau pour photocopie et que l'on commande les quantités de lumière employées pour la photocopie en fonction des valeurs de la densité des couleurs de l'original à photocopier mesurées et que la rotation des filtres chromatiques (3) se fasse pour l'adaptation précise de la courbe de transmission spectrale à la sensibilité spectrale du matériau pour photocopie.

4. Procédé selon la revendication 3, caractérisé par le fait que la mesure de la densité des couleurs se fait avec un capteur 4 qui saisit l'intensité de la lumière passant à travers le filtre chromatique (3).

5. Procédé selon l'une des revendications précédentes, caractérisé par le fait que l'on fait tourner les différents filtres d'angles différents.

6. Procédé selon la revendication 3, caractérisé par le fait que pour adapter la courbe de transmission spectrale du dispositif de mesure (3) de la sensibilité spectrale du matériau pour photocopie on mesure un original de test à photocopier (6) dont on connaît la courbe de densité spectrale et que l'on fait tourner le film chromatique (3) jusqu'à ce que l'intensité mesurée atteigne un maximum.

7. Procédé selon la revendication 6, caractérisé par le fait que l'on détecte un maximum d'intensité par voie électronique.

8. Photocopieuse couleur pour photocopier un original couleur sur un matériau pour photocopie couleur, comportant un dispositif de mesure contenant plusieurs filtres chromatiques pour mesurer, par points ou par zones, les valeurs de la densité de couleur de l'original à photocopier dans les trois couleurs de base, étant précisé que l'on adapte l'allure de la courbe de transmission spectrale du dispositif de mesure à la sensibilité spectrale du matériau pour photocopie et que l'on commande les quantités de lumière employées lors de la photocopie aux valeurs de la densité de couleur mesurées, caractérisée par le fait que sont prévus des moyens avec lesquels on peut faire tourner chacun des filtres chromatiques indépendamment l'un de l'autre de façon que pour chaque filtre chromatique l'angle d'incidence ($\alpha$) de la lumière tombant sur le filtre chromatique se modifie indépendamment des angles d'incidence des autres filtres chromatiques.

9. Dispositif selon la revendication 8, caractérisé par le fait qu'est prévu un capteur (4) qui saisit l'intensité de la lumière passant à travers le filtre chromatique (3).

10. Dispositif selon la revendication 9, caractérisé par le fait que le diamètre m de la surface active du capteur (4) est supérieur à la demi-épaisseur d du filtre chromatique (3) et supérieur ou égal au dixième de l'ouverture maximale b de l'objectif.

Fig. 1

b: Objektivblende
d: Filterdicke
l: Abstand Objektiv - Filter
n: Größe der Meßzelle
α: Filterdrehwinkel

Fig.2

Fig.3

Fig.4

EP 0 548 668 B1